# DEMANDE DE BREVET EUROPEEN

(11) **EP 0 700 878 A1**
(43) Date de publication de la demande: **13.03.1996**
(21) Numéro de dépôt: 95402024.4
(22) Date de dépôt: 07.09.1995
(51) Int. Cl.: C03C 8/22, C03C 8/14, C03C 17/02

(54) **Composition d'émail pour substrat en verre**

(30) Priorité: 09.09.1994 FR 9410797
(71) Demandeur: SAINT-GOBAIN VITRAGE INTERNATIONAL, F-92400 Courbevoie (FR)
(72) Inventeur: Beyrle, André, F-60170 Tracy-le-Val (FR)
(74) Mandataire: Muller, René

(57) **Abrégé**

La présente invention concerne une composition d'émail pour substrat en verre, ladite composition comprenant au moins une fritte de base et au moins une fritte additionnelle dont le point de fusion est supérieur à 750°C et, de préférence, supérieur ou égal à 800-850°C.

L'émail selon l'invention présente notamment de bonnes propriétés anti-adhésives.

## Description

La présente invention concerne une composition d'émail destinée notamment à revêtir des substrats en verre sur au moins une partie de leur surface.

Les émaux sont bien connus de l'état de la technique et sont notamment utilisés pour revêtir des substrats en verre, tels que des vitrages, dans l'industrie automobile ou l'industrie du bâtiment. Ils permettent, entre autres, de former des inscriptions ou des couches décoratives, des couches conductrices pour résistances chauffantes ou antennes radio, ou encore des couches protectrices... Ainsi, dans les vitrages automobiles, les émaux sont utilisés pour cacher des bandes collectrices de réseaux chauffants ou pour cacher et protéger les réseaux chauffants eux-mêmes. Ils peuvent également constituer lesdits réseaux chauffants. Ils sont aussi et surtout utilisés pour protéger des cordons de collage servant au montage des vitrages dans les baies de carrosserie contre les rayonnements U.V., en même temps qu'ils masquent lesdits cordons.

Les émaux utilisés pour revêtir des substrats en verre sont généralement formés d'une poudre comprenant une fritte de verre incluant des pigments à base d'oxydes métalliques, et d'un médium ou « véhicule » comprenant généralement un liant permettant l'adhésion de l'émail sur le verre au moment du dépôt, et un solvant ou diluant permettant la mise à viscosité désirée pour l'application de l'émail sur le substrat.

De manière générale, le revêtement d'un substrat en verre, tel qu'un vitrage, par un émail s'opère de la façon suivante : l'émail est déposé par sérigraphie sur les parties choisies du substrat, puis la couche d'émail obtenue est séchée pour permettre son adhésion sur le verre ; d'autres couches d'émail peuvent également être déposées sur la première couche obtenue, chaque couche étant séchée et/ou polymérisée avant dépôt sur la suivante, l'ensemble des couches émaillées étant subséquemment traité thermiquement à haute température afin de vitrifier l'émail et obtenir le revêtement définitif.

Parmi les émaux existants, nombreux sont ceux qui posent des problèmes lors des opérations de transformation à chaud des substrats qu'ils revêtent. Ainsi, lorsque des feuilles de verre émaillées sont soumises à des opérations de bombage, le bombage s'opérant en même temps que le traitement thermique des couches émaillées mentionné au paragraphe précédent, il arrive souvent que les émaux au contact des matrices de transformation adhèrent auxdites matrices et aient éventuellement tendance à se désolidariser des feuilles de verre.

De même, lorsqu'une feuille de verre émaillée est assemblée en sa face recouverte d'émail à une autre feuille de verre en vue de réaliser un vitrage feuilleté, cet assemblage s'opérant avant bombage simultané des deux feuilles, des risques de collage des feuilles de verre l'une à l'autre par l'intermédiaire de l'émail lors du bombage sont à prévoir. D'autres problèmes liés spécifiquement à cette application viennent également s'ajouter dans ce cas aux problèmes de collage, tels que les problèmes d'évacuation hors de l'espace intercalaire entre les deux feuilles de verre des produits de réaction gazeux, ces produits étant dégagés par les composants de l'émail.

Des émaux applicables à des substrats en verre, tels que des vitrages, et n'adhérant pas lors de leur cuisson aux matrices de transformation desdits substrats existent déjà et sont désignés sous le terme d'émaux « anti-adhésifs » ou « anti-stick ».

Par la suite, on convient d'entendre selon l'invention, par « fritte », une composition vitrifiable sous forme de poudre et à base d'oxydes dont éventuellement des pigments ; par « fritte de base » une fritte quelconque servant à l'émaillage de substrats en verre, notamment une fritte ne présentant pas ni ne conférant à l'émail dans lequel elle est incluse de propriétés anti-adhésives ; par « émail », aussi bien la composition ou pâte d'émail employée pour le dépôt sur le substrat, que la couche d'émail sur le substrat à différents stades du procédé de fabrication du substrat émaillé ; et par « émail anti-adhésif », un émail qui, déposé sur un substrat en verre, tel qu'un vitrage, subissant des opérations de transformation, n'adhère pas aux autres éléments venant à son contact lors desdites opérations.

Parmi les émaux anti-adhésifs existants, on peut distinguer les émaux comprenant une fritte de base et des additifs, ces additifs conférant les propriétés anti-adhésives et étant le plus souvent de nature différente de celle des composants de la fritte de base, et les émaux comprenant une fritte de composition spécifique, cette composition spécifique étant à l'origine des propriétés anti-adhésives.

Notamment, les brevets US 4 684 389, US 4 857 096, EP 0 362 136, EP 0 326 519, US 4 959 090, US 4 983 196 et EP 0 490 611 décrivent des émaux comprenant une fritte de base et un médium ou liant pour l'application sur le substrat, auxquels sont ajoutés des métaux oxydables sous forme notamment de poudres, ces additifs conférant auxdits émaux des propriétés anti-adhésives. Il convient cependant de noter que l'ajout de poudres métalliques aux émaux précédemment mentionnés altère généralement la couleur desdits émaux et fragilise, dans certains cas, les substrats en verre revêtus desdits émaux.

D'autres brevets, tels que les brevets EP 0 370 683 et US 4 882 301 proposent des émaux comprenant des frittes présentant des composants formant des phases cristallines et dont les propriétés anti-adhésives découlent ainsi du choix des constituants de la fritte utilisée, et non de l'ajout à une fritte de base d'additifs tels que ceux mentionnés dans le paragraphe précédent. De tels émaux obligent cependant à concevoir des frittes spécifiques et ne peuvent être réalisés à partir de frittes de base quelconques traditionnellement utilisées dans les émaux. De plus, le revêtement de substrats en verre à l'aide de tels émaux entraîne souvent une fragilisation desdits substrats.

Il convient de remarquer que les émaux anti-adhésifs précédemment cités constituent principalement des solutions aux problèmes de collage vis-à-vis de matrices de transformation tels qu'explicités ci-avant. Dans le cas des collages entre feuilles de verre survenant dans la fabrication de vitrages feuilletés, ces émaux peuvent également être utilisés pour empêcher les collages en question, la résolution des autres problèmes liés à cette application nécessitant cependant généralement l'utilisation d'autres composants et/ou le recours à des traitements supplémentaires des feuilles émaillées.

L'objet de la présente invention est de mettre au point un émail présentant de bonnes propriétés anti-adhésives, cet émail pouvant être utilisé avantageusement pour revêtir des substrats en verre, tels que des vitrages, et ne subissant pas après dépôt sur lesdits substrats de phénomènes de collage vis-à-vis d'autres éléments venant à son contact lors des opérations de transformation desdits substrats, que ces éléments soient une feuille de verre ou une matrice de transformation, cet émail pouvant en outre être réalisé à partir de frittes de base et ne présentant pas les inconvénients des émaux précités.

Ces buts sont atteints en ajoutant à une fritte de base un additif particulier sous forme d'une fritte de même nature, c'est-à-dire comprenant essentiellement des oxydes similaires à ceux pouvant être trouvés dans la fritte de base, ladite fritte de même nature présentant cependant des caractéristiques spécifiques différentes de celles de la fritte de base.

La présente invention consiste ainsi en une composition d'émail comprenant au moins une fritte de base, et comprenant en outre une fritte additionnelle dont le point de fusion est supérieur à 750°C et, de préférence, supérieur ou égal à 800-850°C, voire 1000°C.

La présente invention concerne également le procédé d'émaillage de substrats en verre, tels que des vitrages, consistant à appliquer l'émail de composition précédemment définie sur lesdits substrats et à le cuire.

Par « point de fusion », on entend la température à partir de laquelle la fritte commence véritablement à accrocher au verre, cette température étant très supérieure à la température de ramollissement de la fritte, généralement supérieure de plus de 100°C à la température de ramollissement de la fritte. Par « fritte additionnelle », on entend ci-après la fritte ajoutée à la fritte de base dans la composition d'émail selon l'invention précédemment définie, cette fritte conférant les propriétés anti-adhésives recherchées à l'émail dans lequel elle se trouve, et cette fritte présentant un point de fusion supérieur à 750°C et, de préférence, supérieur ou égal à 800-850°C, voire 1000°C, comme indiqué précédemment. Outre le fait de conférer les propriétés anti-adhésives recherchées à l'émail dans lequel elle se trouve, la fritte additionnelle présente l'avantage de ne pas nuire aux caractéristiques ou aux propriétés dudit émail ou du substrat revêtu dudit émail, notamment aux caractéristiques de coloration de l'émail ou aux propriétés mécaniques du substrat émaillé.

Il convient en effet de constater en premier lieu que la fritte additionnelle confère à l'émail dans lequel elle se trouve une viscosité de surface suffisamment importante aux températures de transformation des substrats en verre, tels que des vitrages, revêtus dudit émail (ces températures n'excédant généralement pas 700°C pour les vitrages) pour empêcher, à de telles températures, I'adhésion de l'émail à des éléments autres que le substrat sur lequel il est déposé, lorsque ces éléments viennent à son contact.

Il est important de noter cependant que, parallèlement, la fritte additionnelle précédemment définie n'empêche pas le bon accrochage de l'émail précité au substrat qu'il revêt, cet accrochage se faisant le plus souvent par l'intermédiaire de la fritte de base et/ou éventuellement d'une autre fritte également contenue dans la composition d'émail précitée et cet accrochage s'opérant généralement aux mêmes températures que certaines des températures de transformation précédemment mentionnées ou à des températures inférieures. Il convient de remarquer à ce propos que, de manière générale et également de façon préférée selon l'invention, les frittes de base utilisées présentent un point de fusion inférieur ou approximativement égal au point de ramollissement des substrats en verre, notamment inférieur ou égal à 650°C et, de préférence, inférieur ou égal à 600°C.

Par ailleurs, l'ajout de la fritte additionnelle à la fritte de base dans la composition d'émail selon l'invention n'entraîne pas de changement défavorable de la coloration ou de l'opacité de l'émail et n'entraîne pas d'altération des propriétés mécaniques des substrats revêtus dudit émail, contrairement à l'ajout de poudres métalliques (en ce qui concerne la coloration et éventuellement les propriétés mécaniques des substrats émaillés) ou à l'utilisation de frittes présentant des composants formant des phases cristallines (en ce qui concerne les propriétés mécaniques des substrats émaillés). Dans ces deux derniers cas en effet, la présence dans l'émail de composants formant des phases cristallines ou de métaux oxydables donnant lieu à des réactions d'oxydo-réduction avec les oxydes métalliques présents dans la fritte à laquelle ils sont ajoutés, perturbe le réseau vitreux dudit émail par rapport au réseau vitreux des émaux constitués de frittes de base traditionnelles, et entraîne une dégradation de la coloration de l'émail ou une altération des propriétés mécaniques des substrats revêtus dudit émail.

Dans la composition d'émail selon l'invention, il apparaît que la fritte additionnelle ne vient pas modifier de façon défavorable la constitution du réseau vitreux formé par la fritte de base lors de la vitrification de l'émail et permet d'obtenir des émaux de coloration et d'opacité non dégradées, ainsi que des substrats émaillés présentant des propriétés mécaniques au moins égales et même supérieures à celles habituellement obtenues pour un émail de même composition mais sans fritte additionnelle, ces propriétés étant également supérieures à celles obtenues avec les émaux anti-adhésifs traditionnels précédemment cités (avec poudre métallique ou composants formant des phases cristallines). La coloration et l'opacité des émaux selon l'invention ainsi que les caractéristiques mécaniques des substrats revêtus desdits émaux sont illustrées ultérieurement dans les exemples.

En plus des avantages précédemment cités liés à l'utilisation de la fritte additionnelle, I'émail selon l'invention peut être facilement obtenu à partir de toute fritte de base quelconque et n'oblige pas à remettre en cause la composition des frittes de base utilisées dans les émaux traditionnels pour les applications particulières nécessitant des émaux anti-adhésifs.

Selon un mode de réalisation préféré de la présente invention, la composition d'émail comprend au moins une fritte de base et comprend en outre une fritte additionnelle dont le point de fusion est supérieur à 750°C et, de préférence, supérieur ou égal à 800-850°C, voire 1000°C, et dont la densité est inférieure à celle de la fritte de base. Le fait d'utiliser une telle fritte additionnelle présentant une densité inférieure à celle de la fritte de base permet d'obtenir des émaux aux propriétés anti-adhésives particulièrement bonnes. Dans ce cas notamment et pour un même taux d'additifs, I'émail selon l'invention présente de meilleures propriétés anti-adhésives que les émaux comprenant une fritte de base avec des additifs sous forme de poudres métalliques à base de métaux oxydables.

De préférence, la composition d'émail selon l'invention comprend au moins 5 parts en poids et avantageusement au moins 10 parts en poids de fritte additionnelle pour 100 parts en poids de fritte de base, et au plus 100 parts en poids et avantageusement au plus 50 parts en poids de fritte additionnelle pour 100 parts en poids de fritte de base. En-deçà de 5 parts en poids en effet, les propriétés anti-adhésives obtenues sont négligeables et au-delà de 100 parts en poids, la présence de fritte additionnelle en excès peut nuire à certaines caractéristiques de l'émail. Il convient de remarquer en outre que les propriétés anti-adhésives de l'émail augmentent avec la proportion de fritte additionnelle ajoutée à la fritte de base mais restent approximativement stationnaires au-delà de 50 parts et, de façon plus marquée, au-delà de 100 parts en poids de fritte additionnelle pour 100 parts en poids de fritte de base.

De par sa nature, la fritte additionnelle utilisée dans la composition d'émail selon l'invention comprend, comme la fritte de base, des oxydes dont éventuellement des pigments. Ces oxydes de la fritte additionnelle consistent le plus souvent selon l'invention en des oxydes choisis parmi les oxydes les plus communément employés dans les frittes pour émail, et peuvent être identiques, différents ou avoir des éléments communs par rapport aux oxydes utilisés dans la fritte de base précise à laquelle la fritte additionnelle vient s'ajouter. Il convient de préciser à cet égard que, dans les cas où la fritte additionnelle et la fritte de base possèdent des oxydes communs, la proportion de ces oxydes dans chacune des frittes diffère de façon plus ou moins importante, étant rappelé que la fritte additionnelle présente des caractéristiques spécifiques différentes de celles de la fritte de base.

Parmi les oxydes présents dans la fritte additionnelle, peuvent se trouver des pigments dont le rôle essentiel est de colorer l'émail. Ces pigments peuvent être notamment choisis parmi les oxydes modificateurs connus tels que Cr₂O₃, Co₃O₄, NiO... Bien que leur présence ne soit pas nécessaire au sein de la fritte additionnelle pour obtenir des émaux présentant de bonnes caractéristiques d'opacité, la fritte additionnelle peut également comprendre des opacifiants tels que TiO₂.

Il convient de rappeler que les termes « oxyde modificateur », « oxyde intermédiaire » et « oxyde formateur » sont des termes bien connus de l'homme de l'art dans l'industrie du verre. Les oxydes formateurs sont des oxydes tels que la silice SiO₂... formant les constituants essentiels du réseau vitreux ; les oxydes modificateurs sont des oxydes tels que CaO, K₂O, Na₂O, Fe₂O₃, Cr₂O₃, Co₃O₄, MnO, NiO, CuO, MoO₃, BaO... capables de modifier le réseau vitreux et d'influer sur des propriétés telles que la viscosité ou le point de fusion ; les oxydes intermédiaires sont des oxydes tels que Al₂O₃, TiO₂, PbO, ZnO, ZrO₂, Bi₂O₃... jouant, selon leur environnement et la proportion dans laquelle ils sont présents, le rôle d'oxyde formateur et/ou le rôle d'oxyde modificateur.

En règle générale dans les émaux traditionnels et aussi en règle générale selon l'invention, la fritte de base utilisée comprend SiO₂ comme principal oxyde formateur et comprend au moins un oxyde intermédiaire.

Selon un mode de réalisation préféré de la présente invention, la fritte additionnelle contient au moins le principal oxyde formateur présent dans la fritte de base et, selon une variante de ce mode, contient au moins le principal oxyde intermédiaire présent dans la fritte de base, étant entendu que les proportions de ces oxydes au sein de la fritte de base et au sein de la fritte additionnelle diffèrent.

Dans un mode de réalisation préféré de la présente invention, la fritte de base utilisée est une fritte comprenant SiO₂ comme oxyde formateur et PbO comme principal oxyde intermédiaire, PbO ayant principalement un rôle de fondant. Selon une variante de ce mode de réalisation, la fritte additionnelle présente dans la composition d'émail selon l'invention contient également SiO₂ comme agent formateur et contient au moins PbO comme oxyde intermédiaire et, éventuellement, comme oxyde intermédiaire principal.

Selon d'autres modes de réalisation de la présente invention, la fritte de base utilisée est une fritte comprenant SiO₂ comme oxyde formateur et Bi₂O₃ ou ZnO comme principal oxyde intermédiaire.

Il convient de remarquer que, dans de nombreux modes de réalisation de la présente invention, la proportion du principal oxyde formateur au sein de la fritte additionnelle est beaucoup plus importante que la proportion du principal oxyde formateur au sein de la fritte de base. Inversement, la proportion du principal oxyde intermédiaire dans la fritte additionnelle est, dans de nombreux modes de réalisation également, bien plus faible que la proportion du principal oxyde intermédiaire dans la fritte de base.

Selon un mode de réalisation de la présente invention, la fritte additionnelle utilisée présente ainsi un taux d'oxyde formateur principal supérieur d'au moins 5 % au taux d'oxyde formateur principal présent dans la fritte de base que les oxydes formateurs en question soient identiques ou non. Selon un autre mode ou une variante de ce mode de réalisation, la fritte additionnelle présente un taux d'oxyde intermédiaire principal inférieur d'au moins 5 % au taux d'oxyde intermédiaire principal présent dans la fritte de base, que les oxydes intermédiaires en question soient identiques ou non.

Le rapport entre le taux d'oxyde intermédiaire principal et le taux d'oxyde formateur principal dans la fritte additionnelle est ainsi, dans la plupart des cas selon l'invention, inférieur au rapport entre le taux d'oxyde intermédiaire principal et le taux d'oxyde formateur principal dans la fritte de base. Il peut même être approximativement l'inverse de ce dernier, comme dans l'exemple 1 ultérieurement illustré, en ce sens que le taux d'oxyde formateur principal dépasse le taux d'oxyde intermédiaire principal au sein de la fritte additionnelle alors que dans la fritte de base utilisée selon ces modes de réalisation particuliers, le taux d'oxyde formateur principal est inférieur au taux d'oxyde intermédiaire principal.

De même que la fritte additionnelle selon l'invention se caractérise par des rapports entre oxydes différents de ceux de la fritte de base utilisée, la composition d'émail selon l'invention se caractérise, en règle générale, par des rapports entre oxydes différents de ceux habituellement observés dans des compositions d'émail traditionnelles (sans fritte additionnelle telle que définie dans l'invention), destinées aux mêmes applications et comprenant les mêmes oxydes principaux (au moins le ou les oxydes formateurs et le principal oxyde intermédiaire) que la composition d'émail selon l'invention que l'on considère. Notamment, la composition d'émail selon l'invention présente un rapport entre son taux d'oxyde intermédiaire principal et son taux d'oxyde(s) formateur(s) plus faible que le rapport entre le taux d'oxyde intermédiaire principal et le taux d'oxyde(s) formateur(s) observé dans les compositions d'émail traditionnelles destinées aux mêmes applications et comprenant le même oxyde intermédiaire principal et le ou les mêmes oxydes formateurs. Cette différence entre le rapport précité de la composition d'émail selon l'invention et celui d'une composition d'émail traditionnelle destinée aux mêmes applications et comprenant les mêmes oxydes principaux est généralement d'au moins 5 %, le principal oxyde intermédiaire et le ou les oxydes formateurs présents dans la composition d'émail selon l'invention étant la plupart du temps ceux de la fritte de base et de la fritte additionnelle présents dans ladite composition et étant apportés par lesdites frittes et éventuellement par d'autres frittes présentes dans la composition.

Comme indiqué précédemment, la composition d'émail selon l'invention comprend entre 5 et 100 parts en poids de fritte additionnelle pour 100 parts en poids de fritte de base. Selon un mode de réalisation particulier de la présente invention, la composition d'émail comprend entre 10 et 20 parts en poids de fritte additionnelle pour 100 parts en poids de fritte de base. Cette composition est particulièrement bien adaptée à l'émaillage de substrats en verre, tels que des vitrages, destinés à être bombés et/ou trempés, ou à l'émaillage de feuilles de verre devant faire partie d'un vitrage feuilleté, I'émail étant déposé sur la face d'une feuille de verre n'étant pas mise au contact d'une autre feuille de verre pendant le bombage simultané des feuilles de verre.

Selon un autre mode de réalisation particulier de la présente invention, la composition d'émail comprend entre 30 et 50 parts en poids de fritte additionnelle pour 100 parts en poids de fritte de base. Cette composition est particulièrement bien adaptée à l'émaillage de substrats en verre tels que des feuilles de verre destinées à faire partie d'un vitrage feuilleté, I'émail étant déposé sur la face d'une feuille de verre devant être placée au contact d'une autre feuille de verre pendant le bombage simultané des feuilles de verre.

Outre les frittes jusqu'à présent mentionnées, la composition d'émail selon l'invention peut comprendre au moins un médium permettant l'application et l'adhésion temporaire de l'émail sur un substrat. Le médium, choisi selon la destination de l'émail, doit assurer une bonne mise en suspension des particules des frittes utilisées et doit se consumer totalement au plus tard lors de la cuisson de l'émail. Le médium peut comporter des solvants, des diluants, des huiles telles que des huiles de pin et autres huiles végétales, des résines telles que des résines acryliques, des fractions de pétrole, des matières filmogènes telles que des matières cellulosiques... Les émaux selon l'invention peuvent également comprendre d'autres composants, tels que des additifs différents de la fritte additionnelle, ou d'autres frittes particulières.

Dans le cas où l'on désire émailler une feuille de verre destinée à la réalisation d'un vitrage feuilleté, cette feuille de verre devant être mise au contact d'une autre feuille de verre en sa face émaillée avant bombage simultané des deux feuilles de verre, I'émail utilisé comprend préférentiellement, en plus d'une fritte de base à laquelle vient s'ajouter une fritte additionnelle selon l'invention, un médium s'éliminant, par évaporation ou carbonisation, à une température inférieure au point de ramollissement des feuilles de verre et, de préférence, à une température inférieure à 450°C et, éventuellement, une fritte dont le point de fusion est inférieur à 450°C environ.

Les émaux selon la présente invention sont principalement destinés à revêtir des substrats en verre tels que des feuilles de verre pour vitrages. Ces émaux sont préférentiellement déposés par sérigraphie sur les substrats qu'ils doivent revêtir, puis cuits, la cuisson s'opérant généralement pendant le bombage des feuilles de verre aux alentours de 600-700°C et/ou préalablement à la trempe lorsque lesdites feuilles doivent être bombées et/ou trempées.

L'application de l'émail peut également se faire par pulvérisation, revêtement au rouleau... et la couche d'émail déposée est préférentiellement soumise après application à un séchage à basse température pour fixer temporairement l'émail, notamment par élimination des diluants du médium servant à l'application de l'émail sur le substrat.

Le bombage des feuilles de verre s'opère selon des méthodes connues, par gravité (bombage notamment des feuilles de verre par paires en vue de la réalisation de verres feuilletés) ou à l'aide de matrices, I'émail selon l'invention, déposé sur au moins une feuille de verre, n'adhérant pas aux autres feuilles de verre ou aux matrices venant à son contact, du fait de ses propriétés anti-adhésives.

Selon un mode de réalisation particulier de la présente invention, une composition d'émail comprenant préférentiellement entre 10 et 20 parts en poids de fritte additionnelle selon l'invention pour 100 parts en poids de fritte de base et comprenant également un médium, est utilisée pour revêtir une feuille de verre pour vitrage destinée à être bombée et/ou trempée selon des méthodes bien connues de l'homme de l'art. De préférence, la fritte de base utilisée dans la composition d'émail selon l'invention présente un point de fusion inférieur aux températures de bombage pour permettre le préaccrochage de l'émail sur la feuille de verre, et le bombage et la trempe s'opèrent dans une même presse. La même composition d'émail peut également être utilisée pour revêtir une feuille de verre devant faire partie d'un vitrage feuilleté, sur une face n'étant pas mise au contact d'une autre feuille de verre pendant le bombage simultané des feuilles, I'émaillage et la réalisation du vitrage feuilleté s'effectuant selon des méthodes bien connues de l'homme de l'art.

Selon un autre mode de réalisation de la présente invention, une composition d'émail comprenant préférentiellement entre 30 et 50 parts en poids de fritte additionnelle selon l'invention pour 100 parts en poids de fritte de base, un médium s'éliminant à une température inférieure au point de ramollissement des feuilles de verre et, éventuellement, une fritte dont le point de fusion est inférieur à 450°C environ, est utilisée pour revêtir une feuille de verre devant faire partie d'un vitrage feuilleté, sur une face devant être placée au contact d'une autre feuille de verre pendant le bombage simultané des feuilles de verre. Dans ce cas, la feuille de verre revêtue d'émail est préférentiellement soumise à un prétraitement thermique à une température comprise entre 150°C et le point de ramollissement des feuilles de verre avant l'assemblage de la feuille émaillée et d'une autre feuille de verre et le bombage simultané des deux feuilles de verre, la cuisson définitive de l'émail se faisant lors dudit bombage. Les deux feuilles de verre sont ensuite séparées pour insérer au moins un film intercalaire de matière différente, puis le vitrage feuilleté est obtenu par assemblage de l'ensemble, à chaud et sous pression.

Les exemples suivants illustrent, de manière non exhaustive, des compositions d'émail selon l'invention et permettent de comparer les caractéristiques de couleur, d'opacité et les propriétés mécaniques des émaux ou substrats revêtus d'émail selon l'invention avec les caractéristiques de couleur, d'opacité ou les propriétés mécaniques d'autres émaux anti-adhésifs ou non ou d'autres substrats revêtus d'autres émaux.

### EXEMPLE 1

Dans cet exemple, la composition d'émail réalisée comprend 100 parts en poids d'une fritte de base comprenant 16 % en poids d'oxyde formateur SiO₂, 47 % en poids d'oxyde intermédiaire principal PbO et 37 % en poids d'autres oxydes intermédiaires ou modificateurs, cette fritte de base présentant un point de fusion de 620°C et une densité de l'ordre de 3,8 ; 10 parts en poids d'une fritte additionnelle comprenant 42 % en poids d'oxyde formateur SiO₂, 27 % en poids d'oxyde intermédiaire principal PbO et 31 % en poids d'autres oxydes intermédiaires ou modificateurs, cette fritte additionnelle présentant un point de fusion de 850°C et une densité de l'ordre de 2,5 ; et 25 parts en poids d'un médium à base d'huile de pin comportant 3 % en poids de résine acrylique.

On remarque que la proportion d'oxyde formateur au sein de la fritte additionnelle est beaucoup plus importante que la proportion d'oxyde formateur au sein de la fritte de base. Inversement, la proportion du principal oxyde intermédiaire PbO est bien plus faible dans la fritte additionnelle que dans la fritte de base.

L'émail de composition ci-dessus mentionnée est déposé par sérigraphie sur une feuille de verre puis séché à moins de 100°C.

L'émail déposé sur ce substrat est cuit aux alentours de 640°C après séchage et les propriétés mécaniques du substrat émaillé sont déterminées dans les conditions définies par la norme ANSI Z26.1 en déterminant la hauteur, par rapport au substrat émaillé, à partir de laquelle une bille lâchée de cette hauteur et tombant sur le substrat émaillé entraîne le bris de celui-ci. Plus la hauteur de chute nécessaire pour entraîner le bris du substrat est grande, plus la résistance mécanique du substrat émaillé est importante.

La hauteur de chute nécessaire pour entraîner le bris du substrat revêtu de l'émail selon cet exemple est d'environ 2,32 m.

D'autre part, la coloration de l'émail est déterminée en mesurant les coordonnées colorimétriques L*, a* et b* définies et proposées en 1931 par la Commission Internationale de l'Eclairage (CIE) et ayant fait l'objet d'une recommandation officielle CIE en 1976 (Commission Internationale de l'Eclairage, Colorimetry - Recommandations Officielles - Publication CIE n° 15-2, Vienne, 1986). Les mesures en réflexion, effectuées sur spectrocolorimètre Minolta CM 2002, sous illuminant D 65 conduisent, pour l'émail selon cet exemple, aux valeurs suivantes : L* = 6,5 ; a* = 0,5 ; b* = 1,1, ce qui correspond à un émail de coloration noire.

Le facteur de transmission lumineuse de l'émail est également déterminé et est de l'ordre de 0,06 %. L'émail présente par conséquent de bonnes caractéristiques d'opacité.

L'émail selon cet exemple est particulièrement adapté au revêtement de vitrages destinés à être bombés et trempés. Le bombage des feuilles de verre revêtues de l'émail selon cet exemple s'effectue dans ce cas à des températures de l'ordre de 650°C et l'émail selon cet exemple n'adhère pas aux matrices de transformation venant à son contact lors dudit bombage.

### EXEMPLE COMPARATIF 1

Dans cet exemple, la composition pour émail réalisée comprend 100 parts en poids de la fritte de base décrite dans l'exemple 1 et 25 parts en poids du médium également décrit dans l'exemple 1.

L'émail selon cet exemple est déposé sur une feuille de verre et traité de la même façon que dans l'exemple 1. La hauteur de chute de bille nécessaire pour entraîner le bris du substrat revêtu de l'émail selon le présent exemple est d'environ 1,75 m. Par ailleurs, les coordonnées colorimétriques de l'émail selon le présent exemple sont les suivantes : L* = 5,9 ; a* = 0,8 ; b* = 1,5, ce qui correspond à un émail de coloration noire. Le facteur de transmission lumineuse de l'émail selon le présent exemple est également de l'ordre de 0,06 % et l'émail adhère, lors du bombage des feuilles de verre revêtues dudit émail, à des températures de 650°C ou moins, aux autres feuilles de verre ou aux matrices de transformation venant au contact dudit émail.

On observe que l'émail selon l'invention décrit dans l'exemple 1, outre ses propriétés anti-adhésives, présente une coloration proche de celle de l'émail traditionnel sans fritte additionnelle décrit dans l'exemple comparatif 1 et présente la même opacité que ledit émail traditionnel. L'ajout de la fritte additionnelle définie dans l'invention à des frittes de base traditionnelles n'entraîne pas par conséquent d'altération de la coloration ou de l'opacité de l'émail. Par ailleurs, I'émail selon l'invention, décrit notamment dans l'exemple 1, permet d'améliorer les propriétés mécaniques des substrats émaillés par rapport aux substrats émaillés traditionnels comme le prouvent les résultats obtenus aux tests de chute de bille.

### EXEMPLES COMPARATIFS 2 ET 3

Dans ces exemples, la composition d'émail réalisée comprend 100 parts en poids de la fritte de base décrite dans l'exemple 1, 10 parts en poids de fer oxydable Fe (exemple comparatif 2) ou de zinc oxydable Zn (exemple comparatif 3) et 25 parts en poids du médium décrit dans l'exemple 1.

L'émail selon chacun de ces exemples est déposé sur une feuille de verre puis traité comme dans l'exemple 1. La hauteur de chute de bille nécessaire pour entraîner le bris du substrat revêtu de l'émail selon l'exemple comparatif 2 est d'environ 1,50 m et celle nécessaire pour entraîner le bris du substrat revêtu de l'émail selon l'exemple comparatif 3 est d'environ 1,80 m. Par ailleurs, les coordonnées colorimétriques de l'émail selon l'exemple comparatif 2 sont les suivantes : L* = 7,5 ; a* = 0,7 ; b* = 1,7 et celles de l'émail selon l'exemple comparatif 3 sont les suivantes : L* = 9,0 ; a* = 0,5 ; b* = 1,3, ce qui correspond à des émaux de coloration plus grise que l'émail traditionnel sans additif poudre métallique décrit dans l'exemple comparatif 1 (cette coloration grise se traduit notamment par une valeur de L* notablement plus élevée). Le facteur de transmission lumineuse de l'émail selon l'exemple comparatif 2 est par ailleurs de l'ordre de 0,04 %, celui de l'émail selon l'exemple comparatif 3 étant de l'ordre de 0,08 %. Les émaux selon les exemples comparatifs 2 et 3 présentent en outre des propriétés anti-adhésives.

Il convient de remarquer qu'à taux d'additifs égaux, la coloration obtenue avec l'émail selon l'invention (illustré notamment dans l'exemple 1) est beaucoup plus proche de la coloration de l'émail traditionnel comprenant la même fritte de base (illustré notamment dans l'exemple comparatif 1) que la coloration obtenue avec des émaux de même fritte de base et comprenant comme additifs des métaux oxydables. Par ailleurs, les propriétés mécaniques des substrats revêtus de l'émail selon l'invention précité sont meilleures que celles des substrats revêtus des émaux précités comprenant des métaux oxydables, les propriétés mécaniques de ces derniers substrats étant parfois inférieures à celles des substrats revêtus d'émail traditionnel de même fritte de base (voir notamment l'exemple comparatif 2).

Il convient de signaler également que, à taux d'additifs égaux, I'émail selon l'invention illustré dans l'exemple 1 présente de meilleures propriétés anti-adhésives aux températures et pressions habituelles de bombage que les émaux anti-adhésifs comprenant des métaux oxydables illustrés dans les exemples comparatifs 2 et 3.

### EXEMPLE COMPARATIF 4

Dans cet exemple, la composition d'émail comprend des composants formant des phases cristallines et est commercialisée sous la référence 1T55M056 par la société Johnson Matthey. L'émail selon cet exemple est déposé sur une feuille de verre puis traité comme dans l'exemple 1.

La hauteur de chute de bille nécessaire pour entraîner le bris du substrat revêtu de l'émail selon le présent exemple est d'environ 1,00 m. Par ailleurs, les coordonnées colorimétriques de l'émail selon le présent exemple sont les suivantes : L* = 6,5 ; a* = 0,8; b* = 1,7, ce qui correspond à un émail de coloration noire.

Le facteur de transmission lumineuse de l'émail selon le présent exemple est de l'ordre de 0,03 % et l'émail selon le présent exemple présente des propriétés anti-adhésives.

Il convient de remarquer que l'utilisation d'un émail comprenant des constituants formant des phases cristallines fragilise considérablement le substrat en verre sur lequel l'émail est déposé, par rapport à l'utilisation d'un émail traditionnel. L'émail selon l'invention (illustré notamment dans l'exemple 1) permet au contraire d'obtenir des substrats émaillés aux propriétés mécaniques améliorées.

### EXEMPLE 2

Dans cet exemple, la composition pour émail réalisée comprend 100 parts en poids d'une fritte de base comprenant 12,5 % en poids d'oxyde formateur SiO₂, 57 % en poids d'oxyde intermédiaire principal PbO et 30,5 % en poids d'autres oxydes intermédiaires ou modificateurs, cette fritte de base présentant un point de fusion de l'ordre de 520°C et une densité de l'ordre de 4 ; 40 parts en poids de la fritte additionnelle décrite dans l'exemple 1, 10 parts en poids d'une fritte de point de fusion de l'ordre de 300°C à base d'anhydride borique B₂O₃ ; et 25 parts en poids du médium utilisé dans l'exemple 1.

L'émail selon cet exemple est particulièrement adapté au revêtement de feuilles de verre destinées à faire partie d'un vitrage feuilleté, I'émail étant déposé sur la face d'une feuille de verre devant être placée au contact d'une autre feuille de verre pendant le bombage simultané des feuilles de verre. Le bombage des feuilles de verre s'effectue dans ce cas à des températures de l'ordre de 580-610°C et l'émail selon cet exemple n'adhère pas à l'autre feuille de verre venant à son contact pendant l'opération de bombage.

Les émaux selon l'invention sont principalement utilisés pour revêtir des substrats en verre, tels que des vitrages, dans l'industrie automobile ou du bâtiment.

## Revendications

1. Composition d'émail pour substrat en verre comprenant au moins une fritte de base, et au moins une fritte additionnelle dont le point de fusion est supérieur à 750°C.

2. Composition d'émail selon la revendication 1, caractérisée en ce que la fritte de base présente un point de fusion inférieur ou approximativement égal au point de ramollissement du verre.

3. Composition d'émail selon l'une des revendications 1 ou 2, caractérisée en ce que la densité de la fritte additionnelle est inférieure à celle de la fritte de base.

4. Composition d'émail selon l'une des revendications 1 à 3, caractérisée en ce qu'elle comprend entre 5 et 100 parts en poids et, de préférence, entre 10 et 50 parts en poids de fritte additionnelle pour 100 parts en poids de fritte de base.

5. Composition d'émail selon l'une des revendications 1 à 4, caractérisée en ce que la fritte additionnelle et la fritte de base comprennent des oxydes, dont éventuellement des pigments, ces oxydes étant choisis parmi les oxydes formateurs, intermédiaires et modificateurs connus.

6. Composition d'émail selon la revendication 5, caractérisée en ce que la fritte de base comprend SiO₂ comme principal oxyde formateur et comprend au moins un oxyde intermédiaire.

7. Composition d'émail selon l'une des revendications 5 ou 6, caractérisée en ce que la fritte additionnelle comprend le principal oxyde formateur présent dans la fritte de base.

8. Composition d'émail selon l'une des revendications 5 à 7, caractérisée en ce que la fritte de base comprend PbO, Bi₂O₃ ou ZnO comme principal oxyde intermédiaire.

9. Composition d'émail selon l'une des revendications 5 à 8, caractérisée en ce que la fritte additionnelle comprend le principal oxyde intermédiaire présent dans la fritte de base.

10. Composition d'émail selon l'une des revendications 5 à 9, caractérisée en ce que la fritte additionnelle présente un taux d'oxyde formateur principal supérieur d'au moins 5 % au taux d'oxyde formateur principal présent dans la fritte de base.

11. Composition d'émail selon la revendication 10, caractérisée en ce que la fritte additionnelle présente un taux d'oxyde intermédiaire principal inférieur d'au moins 5 % au taux d'oxyde intermédiaire principal présent dans la fritte de base.

12. Composition d'émail selon l'une des revendications 5 à 11, caractérisée en ce que le rapport entre le taux d'oxyde intermédiaire principal et le taux d'oxyde formateur principal dans la fritte additionnelle est inférieur au rapport entre le taux d'oxyde intermédiaire principal et le taux d'oxyde formateur principal dans la fritte de base.

13. Composition d'émail selon l'une des revendications 5 à 12, caractérisée en ce que le rapport entre le taux d'oxyde intermédiaire principal et le taux d'oxydes formateurs dans ladite composition est inférieur d'au moins 5 % au rapport entre le taux d'oxyde intermédiaire principal et le taux d'oxydes formateurs dans une composition d'émail traditionnelle pour substrat en verre, sans fritte additionnelle, et comprenant les mêmes oxydes formateurs et le même oxyde intermédiaire principal que ladite composition.

14. Composition selon l'une des revendications 1 à 13, caractérisée en ce qu'elle comprend en outre un médium.

15. Composition selon la revendication 14, caractérisée en ce qu'elle comprend entre 10 et 20 parts en poids de fritte additionnelle pour 100 parts en poids de fritte de base.

16. Composition selon la revendication 14, caractérisée en ce qu'elle comprend entre 30 et 50 parts en poids de fritte additionnelle pour 100 parts en poids de fritte de base et en ce que le médium s'élimine à une température inférieure au point de ramollissement du verre, de préférence inférieure à 450°C.

17. Composition selon la revendication 16, caractérisée en ce qu'elle comprend en outre une fritte dont le point de fusion est inférieur à 450°C environ.

18. Procédé d'émaillage de substrats en verre consistant à appliquer sur ledit substrat une composition d'émail telle que définie dans l'une des revendications 1 à 17 et à cuire l'émail.

19. Application du procédé tel que défini dans la revendication 18 à la réalisation de vitrages émaillés bombés et/ou trempés, caractérisée en ce que l'on utilise une composition d'émail telle que définie dans la revendication 15.

20. Application du procédé tel que défini dans la revendication 18 à la réalisation de vitrages émaillés feuilletés, I'émail étant déposé à l'intérieur du vitrage feuilleté, caractérisée en ce que l'on utilise une composition d'émail telle que définie dans l'une des revendications 16 ou 17.
